Europäisches Patentamt

European Patent Office

Office européen des brevets

(19)

(11) Numéro de publication:

# 0 200 841
## A1

(12)

# DEMANDE DE BREVET EUROPEEN

(21) Numéro de dépôt: 85420081.3

(22) Date de dépôt: 06.05.85

(51) Int. Cl.⁴: **A 01 K 59/04**

(43) Date de publication de la demande: **12.11.86**
**Bulletin 86/46**

(84) Etats contractants désignés: **BE CH DE FR GB IT LI SE**

(71) Demandeur: **SERINOX S.A., Route Ste-Marguerite B.P. No. 123, F-63307 Thiers (FR)**

(72) Inventeur: **Furodet, Philippe Société SERINOX, Dépt. Apicole APINOX B.P. No 70, Route Ste-Marguerite F-63307 Thiers (FR)**

(54) **Appareil notamment pour l'extraction du miel.**

(57)    L'objet de l'invention se rattache au secteur technique de l'apiculture.

Le corps C de l'appareil est réalisé en au moins deux parties démontables et combinables A et B pouvant être réalisées par procédé d'emboutissage économique. L'une de ces parties A (emboutie) étant conformée pour l'évacuation du miel en étant agencée pour autoriser le positionnement amovible d'une grille de pré-filtrage (5) ou le support d'une vis pour transformer l'appareil en mélangeur.

Le fond est équipé d'un tuyau flexible ou coudé rigide, amovible ou non amovible.

L'invention est notamment utilisé comme extracteur pour récupérer le miel. Mais l'appareil peut être aussi, indifféremment:
– un couloir à opercules avec support de cadres,
– un maturateur ou un bac décanteur,
– un extracteur,
– un mélangeur à vis,
– une centrifigeuse à opercules par l'emplacement de panier approprié.

ACTORUM AG

- 1 -

APPAREIL NOTAMMENT POUR L'EXTRACTION DU MIEL.

L'appareil a pour objet un appareil notamment pour l'extraction du miel.

L'objet de l'invention se rattache au secteur technique de l'apiculture.

Cet appareil, réalisé en plusieurs éléments constitutifs permettant l'extraction du miel, comprend essentiellement un corps susceptible de recevoir un panier démontable ou un jeu de radiaire supportant des cadres remplis de miel.

Cet appareil est réalisé en deux parties démontables et combinables A et B. A et B peuvent être monobloc embouties et de toute forme connue.

La partie A est réalisée en vue de l'évacuation du miel, par un tube amovible ou non amovible et en étant aussi agencée pour autoriser le positionnement amovible d'une grille de pré-filtrage (une grille de pré-filtrage arrêtant indifféremment les opercules, les brèches de cire et les impuretées mélangées avec le miel. Une cuve emboutie 5 (tamis), à plusieurs niveaux, permet grâce à une perforation dans son fond, ainsi que par l'adjonction d'une grille de filtration de réaliser un tamis double, voire triple.

Il est connu d'employer des appareils extracteurs pour récupérer le miel. Généralement, les cadres rayonnés sont disposés dans des paniers grillagés que l'on monte dans les appareils d'extraction qui agissent en tangentiel par centrifugation en étant commandés manuellement ou mécaniquement par moteur. Dans le cas manuel, une poignée débrayable commande des pignons entraînant le panier.

Ces appareils extracteurs actuels comprennent le plus souvent une cuve cylindrique surélevée pour récupérer à la base, le miel extrait. Le corps de la cuve, en acier inoxydable, notamment, est exécuté en une seule pièce et présente, de ce fait, un encombrement important en période de non utilisation, tel que stockage et expédition.

De plus la vidange du miel s'opère sur un bord du fond de la cuve de l'appareil de sorte qu'il se produit une rétention du miel, ce qui gêne le nettoyage de l'appareil, avec comme conséquence des risques de développement de bactéries au droit de la soudure virole et fond.

Il existe, par conséquent, un problème d'hygiène très important.

Dans les différents appareils extracteurs connus actuellement, nous pouvons faire remarquer que les morceaux de cire et certains morceaux de cadres, mélangés au miel extrait des cadres par centrifugation, viennent souvent obturer les trous d'évacuation.

Cette invention permet de remédier à ces inconvénients d'une manière simple, efficace et rationnelle par la réalisation d'un appareil extracteur caractérisé, en ce que le corps est réalisé en au moins deux parties démontables et combinables, l'une de ces parties étant formée pour l'évacuation du miel en étant agencée pour le positionnement amovible d'une grille de pré-filtrage ou éventuellement pouvant recevoir une vis mélangeuse de miel.

Le fond de la partie de base est conique avec une section dégressive en direction de l'extérieur et présente, dans sa partie centrale, un orifice muni d'un tuyau amovible ou non amovible permettant l'évacuation du miel extrait des cadres. Le mécanisme d'entraînement est débrayable.

Les avantages ressortant de cette invention sont :

- le procédé d'emboutissage de la cuve éliminant la soudure et le développement des bactéries,

- le faible encombrement de l'appareil pour son stockage et son expédition, par le caractère démontable de ce dernier (cuve, mécanisme, pieds réglables et démontables, panier articulé démontable).

- l'évacuation du miel par le centre, muni d'un tuyau coudé amovible ou non amovible, permet d'augmenter le débit et évite tout risque de rétention du miel.

Il en résulte une hygiène accrue :

. le procédé débrayable de la poignée,

. Le procédé d'emboutissage permettant de réaliser à partir d'une feuille un tamis 5 (1 embouti + 1 grille perforée monobloc dans le fond), évite les problèmes de moississure avec les tamis actuels.

L'agencement du fond de l'appareil avec une grille de pré-filtrage évite l'obturation du trou d'évacuation avec des morceaux de cire et éventuellement des morceaux de cadres pendant la phase d'extraction du miel.

- les possibilités diverses de transformer l'appareil en un maturateur ou un couloir à désoperculer muni d'un support de cadre et équipé d'une grille de filtration, permet d'économiser plusieurs appareils.

Pour fixer l'objet de l'invention, sans toutefois le limiter, dans les dessins annexés :

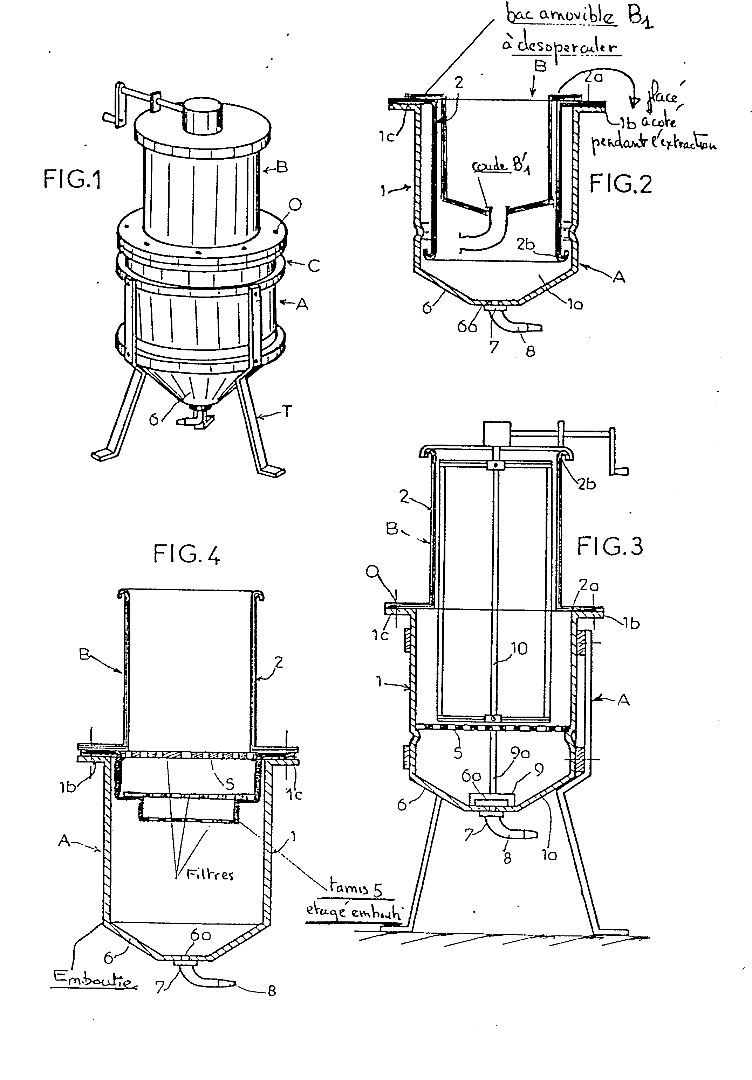

. la figure 1 est une vue en perspective d'un exemple de réalisation de l'appareil selon l'invention,

. la figure 2 est, à caractère schématique, une vue en coupe de l'appareil selon une première variante de réalisation en position de non utilisation.

. la figure 3 est une vue en coupe correspondant à la figure 2, mais en position de fonctionnement de l'appareil,

. la figure 4 est une vue semblable à la figure 3 montrant une autre possibilité d'application de l'appareil.

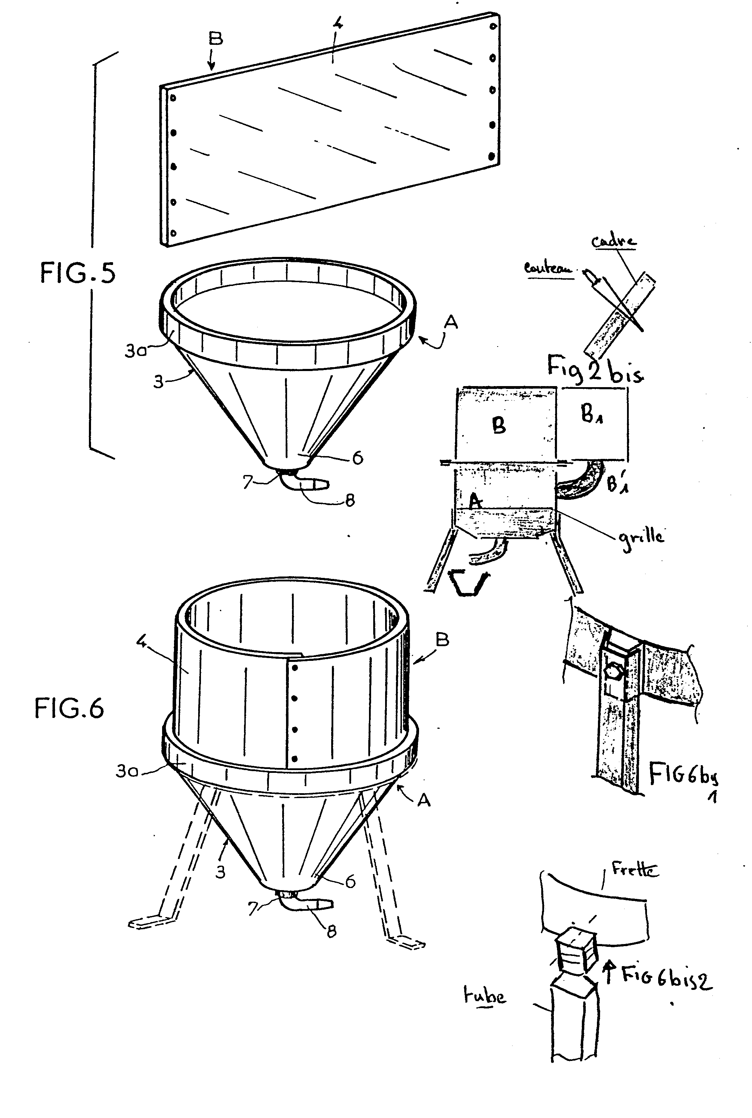

. la figure 5 est une vue en perspective montrant avant montage, les différentes parties constitutives de l'appareil dans une autre forme de réalisation. Le trépied support n'étant pas représenté.

. la figure 6 est une vue en perspective correspondant à la figure 5 après montage des parties constitutives.

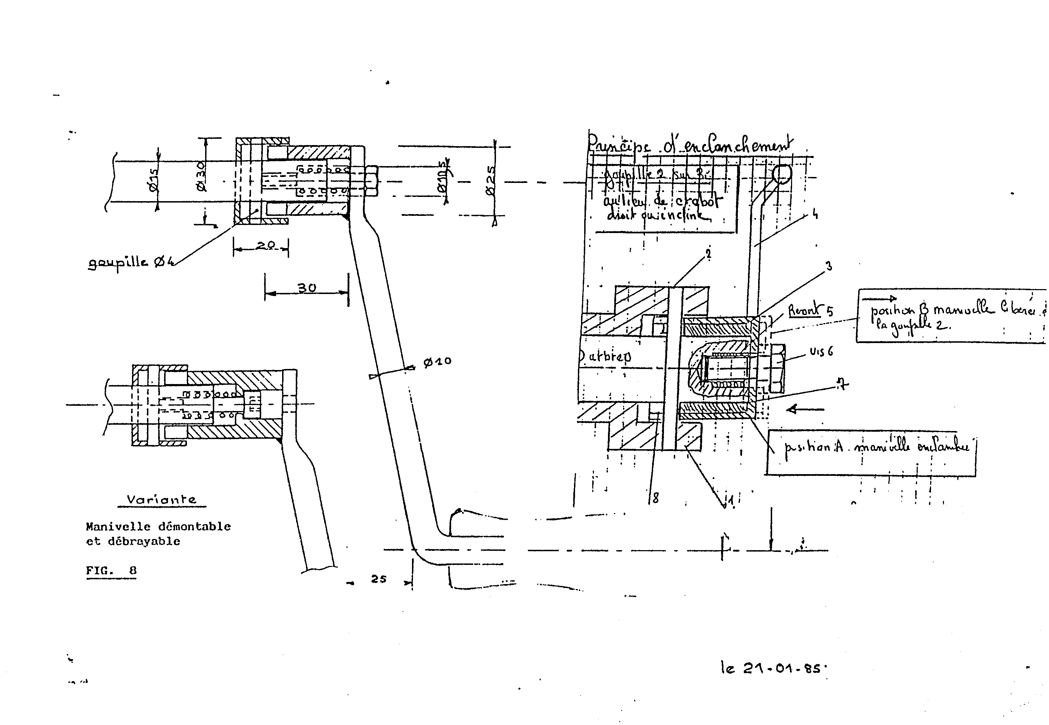

. la figure 8 montre le mécanisme d'entraînement par crabot manuel débrayable et démontable.

Afin de rendre plus concret l'objet de l'invention, on le décrit maintenant d'une manière non limitative en se référant aux exemples de réalisation des figures des dessins.

On rappelle, pour une meilleure compréhension de la suite de la description, que l'appareil comprend un corps C, sous forme d'une cuve, dont la base est conformée pour autoriser l'évacuation du miel extrait.

A l'intérieur de l'appareil, est susceptible d'être monté, libre en rotation, un panier de tout type connu pour recevoir les cadres de ruches.

Le corps C de l'appareil est généralement monté sur un trépied support T équipé de moyen de commande manuel ou automatique pour l'entraînement en rotation du panier en vue de l'extraction tangentielle par centrifugation du miel.

Selon l'invention, le corps C est réalisé en, au moins deux parties démontables et combinables A et B. Possibilité remarquable d'inverser en montant A dans B au lieu de B dans A.

Il est aussi possible de mettre en option une troisième cuve B1, emboîtée dans B, qui pourrait devenir une cuve à désoperculer à côté de l'appareil, formant ainsi un appareil, une fois assemblé, complet : extracteur, avec sur le côté un bac à désoperculer relié ou non relié par un tube d'évacuation B1 au corps A de l'extracteur permettant ainsi de travailler en temps masqué (figure 2 bis).

Dans la réalisation des figures 2 et 3, la partie inférieure A est formée à partir d'une cuve cylindrique notamment 1, présentant un fond 1a et dont l'autre extrémité 1b est ouverte. La partie supérieure de la cuve 1, du côte de l'extrémité 1b, présente un bord circulaire rabbatu périphériquement vers l'extérieur en faisant ainsi office de collerette 1c. Ce bord rabattu venant d'une seule passe avec l'emboutissage de A.

L'autre partie B du coprs C est constituée par une enveloppe cylindrique fermée 2 couverte à ses deux extrémités 2a et 2b. Le diamètre de l'enveloppe 2 est très légèrement inférieur à celui de la cuve 1 de façon à pouvoir y être engagé intérieurement en vue de son imbrication. Cette partie B peut aussi être emboutie.

L'une des extrémités de l'enveloppe 2 présente en bordure une collerette externe 2a susceptible de coopérer en appui avec la collerette 1c de la cuve 1 comme montré aux figures 2 et 3 (possibilité de mettre 1 dans 2).

A la figure 2, dans l'enveloppe 2 est logée à l'intérieur de la cuve 1 et butée en hauteur par sa collerette 2a en appui sur la collerette 1a de la cuve de base. Cette position est particulièrement bien adaptée pour le transport et ou le stockage, l'encombrement en hauteur du corps de l'appareil étant réduit.

A la figure 3, c'est-à-dire en position d'utilisation de l'appareil, l'enveloppe cylindrique 2 est dégagée de la cuve et retournée de 180° pour prendre appui par sa collerette 2a sur la collerette 1a de la cuve de base 1 pour constituer le corps de l'appareil. Dans cette position, les collerettes (1a et 2a) notamment, sont susceptibles de coopérer avec des organes d'assemblages O de tout type connu et approprié. De même, des moyens d'étanchéïté peuvent être interposés entre les collerettes, assemblés soit par un jonc circulaire ou par clamps.

Il est bien évident que le corps de l'appareil ainsi réalisé peut coopérer d'une manière connue avec le trépied T ou tout autre organe support. Le fond de la cuve de base 1 est agencé pour autoriser l'évacuation du miel extrait. Possibilité de démontage du pied (figure 6 bis 1 et 6 bis 2).

Dans la réalisation des figures 5 et 6, la partie inférieure A est formée à partir d'une embase 3 représentant un rebord circulaire 3a de hauteur réduite. L'autre partie B est réalisée à partir d'une bande plate 4 en tout matériau susceptible d'être facilement mis en forme par élasticité en exerçant un certain effort et de reprendre sa position d'origine lorsque cet effort a cessé.

Par exemple, la bande plate 4 de faible épaisseur peut être réalisée en acier inoxydable matière plastique transparente ou tout autre métaux.

Cette plaque 4 est montée sous tension, en combinaison avec le rebord 3a de l'embase, par exemple en étant simplement positionnée à l'intérieur dudit rebord et maintenue sous l'effet de la tension élastique résultant de sa déformation. Les bords de cette plaque 4 sont conformés et agencés pour coopérer avec des moyens d'assemblage et d'étanchéité. Après son montage en combinaison avec l'embase 3, la plaque 4 constitue la paroi circulaire du corps de l'appareil, la largeur de la bande étant déterminée pour conférer à l'appareil, une hauteur normale.

Comme dans la réalisation précédente, le corps de l'appareil coopère avec un trépied. Le fonds de l'embase 3 est agencé pour autoriser l'évacuation du miel.

Suivant une autre caractéristique de l'invention une partie du corps de l'appareil, quelle que soit sa réalisation, est agencée intérieurement pour autoriser le positionnement d'une manière amovible, d'une grille de pré-filtrage 5, au-dessus et à proximité du fond agencé avec le moyen d'évacuation.

Par exemple, la cuve cylindrique 1 ou l'embase 3 peut présenter directement lors de sa fabrication un renflement interne circulaire sur lequel est susceptible de prendre appui la grille de pré-filtrage 5, cette grille devant être disposée au plus bas pour ne pas gêner la mise en place des paniers et leur fonctionnement, compte tenu des hauteurs existantes des paniers.

D'une manière intéressante, dans la réalisation des figures 2 et 3, la grille 5 peut avantageusement être montée en combinaison avec l'une des collerettes (1c ou 2a) ou bien les deux, lorsque la cuve 1 et l'enveloppe 2 sont montées en superposition (figure 4). La grille 5, placée entre le plan de joint de la cuve 1 et de l'enveloppe 2, transforme l'appareil d'extraction en un maturateur.

Une autre caractéristique de l'invention se trouve dans le fait que le fond de l'appareil, quelle que soit sa forme de réalisation, est conformé pour autoriser l'évacuation du miel par le centre ou le bord du fond conique. Dans ce but, l'enceinte 1 ou l'embase 3 présente directement, ou d'une manière rapportée, un fond 6 qui est conique en forme d'entonnoir, c'est-à-dire dont la section est dégressive en direction de l'extérieur. Le fond conique 6 est percé en 6a dans sa partie centrale et coopère avec un moyen de vidange 7 de tout type connu et approprié. A noter que le moyen de vidange 7 est accouplé à un tuyau d'évacuation 8 qui est fixé d'une manière démontable ou non démontable.

- 8 -

Au-dessus du trou d'évacuation 6a, le fond conique 6 présente éventuellement des moyens de supports 9 conformés et agencés en 9a pour permettre le montage et le centrage à libre rotation, d'une manière amovible, de l'axe central 10 entraîné en rotation par des moyens de commande appropriés, ledit axe recevant, d'une manière démontable et connue, le panier P équipé des cadres rayonnés ou bien des couronnes permettant de supporter les cadres d'une manière radiale pour l'extraction du miel en radiaire (miel non fluide).

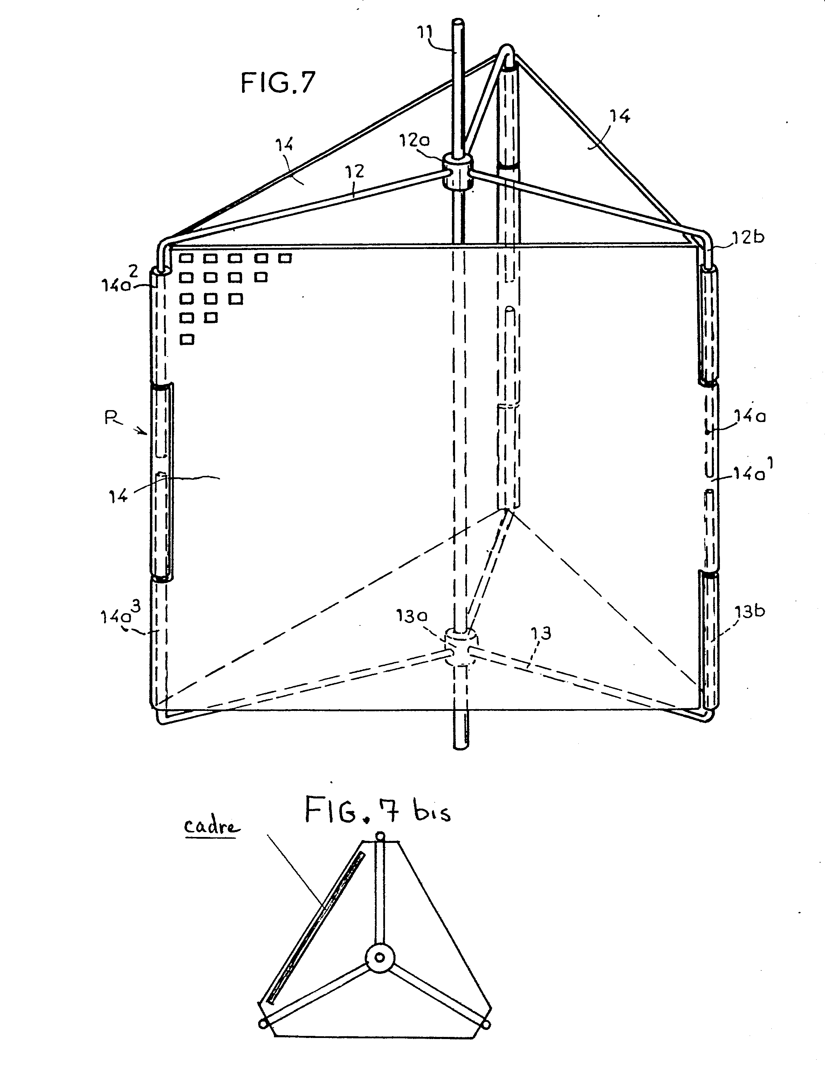

L'appareil décrit peut recevoir tout type de panier, mais d'une manière particulièrement avantageuse, le panier est conformé et agencé pour être exécuté en plusieurs éléments démontables (nombre de côtés perforés illimité). Dans une forme de réalisation illustrée, figure 7, le panier P présente un axe vertical de rotation 11 qui reçoit, d'une manière démontable en parties haute et basse, une série de branches radiales horizontales 12 et 13 reliées à un moyeu central 12 a - 13 a.

Les extrémités libres des branches 12 et 13 sont recourbées à 90° de façon à constituer des portées verticales 12 b - 13 b disposées en regard pour recevoir en combinaison d'une manière démontable, un nombre illimité de plaques perforées ou grilles 14. Dans ce but, les bords verticaux des plaques 14, sont recourbés pour constituer des douilles verticales 14a coopérant avec les portées verticales 12 b - 13 b qui font office d'axe d'articulation aux dites plaques. Les douilles 14 a d'une même plaque, sont disposées en alternance. Par exemple, l'un des côtés présente une seule douille 14 a 1 dans sa partie médiane tandis que l'autre côté présente deux douilles 14 a 2 et 14 a 3, disposées à chaque extrémité en étant écartées l'une de l'autre pour

0200841

- 9 -

autoriser le passage de la douille 14 a 1 d'une plaque adjacente en faisant ainsi office de charnières en combinaison avec les axes 12 b - 13 b pour constituer un polygone au nombre de faces illimitées.

Il est bien évident que le nombre de branches radiales 12 a - 13 a peut être variable pour autoriser le positionnement démontable, de par les axes verticaux 12 b - 13 b, d'un nombre correspondant de plaques de façon à réaliser un panier de section transversale polygonale quelconque (hexagone - pentagone, etc... carré - cylindre - cercle ou toute forme connue).

Il en résulte :

* un montage et démontage rapides,
* la facilité d'expédition par son faible encombrement et poids,
* le coût de fabricatiojn réduit.

On souligne que le cadre réalisé par les plaques perforées peut éventuellement être utilisé seul dans le montage de systèmes réversibles grâce aux charnières directement formées.

Il est bien évident que l'appareil est réalisé en tout matériau compatible aux exigences d'hygiène alimentaire. On souligne que l'on peut avantageusement exécuter l'appareil en combinant deux types de matérieux distincts, tels que l'acier inoxydable et d'une matière plastique transparente ou aluminium alimentaire du type A 5 ou tous autres métaux, cela du fait que ledit appareil est en deux parties démontables indépendantes. Dans cette hypothèse, d'une manière préférée, la partie supérieure B du corps de l'appareil est réalisée en matière plastique transparente permettant de contrôler l'extraction du miel des cadres.

Il est intéressant de remarquer la légère variante de montage (figure 7 bis), permettant d'augmenter

- 10 -

la place recevant les cadres remplis de miel et le nombre illimité de côtés du polygone, ou d'un volume pouvant être cylindirque où de toute forme connue assemblée par les moyens d'articulation décrits ci-dessus.

Sur les figures 6 bis 1 et 6 bis 2 sont décrites les possibilités d'emboîtement des pieds démontables sur l'extracteur :

. possibilité d'emboîtement sous forme de coin permettant un serrage efficace et contrôlé par le réglage de la vis de fixation,

. possibilité d'emboîtement de pied en tube rond, rectangulaire ou toute forme connue sur une embase ronde massive, soit ronde, rectangulaire, soudée sur l'extracteur recevant les pieds par coincement.

0200841  19 AOUT 1985

## REVENDICATIONS

1. Appareil réalisé en plusieurs éléments constitutifs permettant l'extraction du miel, comprend essentiellement un corps susceptible de recevoir un panier démontable ou un jeu de radiaire supportant des cadres. La base du corps inférieur conçue pour autoriser l'évacuation du miel, caractérisé en ce que le corps C est réalisé en au moins deux parties démontables et combinables A et B (A pouvant être monobloc, ainsi que B et de toute forme connue).

2. L'une de ces parties A, est conformée pour l'évacuation du miel par un tube coudé en acier ou en plastique amovible ou non amovible, monté suivant un système d'étanchéité type évacuation collerette, joint, écrou, étant agencé pour autoriser le positionnement éventuel d'une grille de pré-filtration (grille permettant d'arrêter soit les impuretés de miel, les opercules venues de la première opération de désoperculation des cadres ou bien l'arrêt des brèches de cire).

3. La partie inférieure A est formée par une cuve cylindrique 1 emboutie, réalisée suivant le procédé d'emboutissage dont le bord supérieur obtenu par emboutissage opposé au fond de ladite cuve présente extérieurement une collerette d'appui circulaire 1 c, l'autre partie B étant constituée par une enveloppe cylindrique 2 de diamètre inférieur à celui de la cuve pour y être emboîtée et présente une collerette externe 2 a susceptible de coopérer avec l'autre collerette 1 c, d'une part en position d'emboîtement des deux parties 1 et 2, et d'autre part, après retournement, en position de chevauchement, en superposition des dites deux parties. Appareil réalisé économiquement par procédé d'emboutissage.

4. Les collerettes 1c et 2a en position de chevauchement des deux parties 1 et 2 coopèrent avec des moyens d'assemblage et d'étanchéité.

La partie inférieure A est formée par une embase 3 présentant un ou des agencements permettant le positionnement et le centrage d'une manière démontable de la deuxième partie B sous forme d'une bande plate 4 en tout matériau susceptible d'être facilement mise en forme par élasticité pour être positionnée et fixée en combinaison avec la partie inférieure de base 3.

La plaque 4 est montée sous tension en combinaison avec un rebord équerré 3a de l'embase 3 en étant positionné à l'intérieur dudit rebord et maintenue sous l'effet de tension élastique résultant de sa déformation.

La plaque 4 présente des agencements susceptibles de coopérer avec des moyens de blocage en position.

5. Le fond conique 6 de section dégressive en direction de l'extérieur, ledit fond, dans sa partie centrale 6 a coopérant avec un ou des moyens pour l'évacuation du miel extrait.

Le moyen d'évacuation coopère avec un tuyau flexible ou coudé rigide, amovible ou non amovible, montré centré ou non centré sur le fond.

Le fond conique 6 présente des moyens supports 9 conformés et agencés en 9 a pour permettre le montage et le centrage à libre rotation, de l'axe central recevant le panier P équipé des cadres rayonnés ou radiaires et entraîné en rotation par des moyens de commande appropriés.

6. Le panier P est exécuté en plusieurs éléments démontables et présente un axe vertical de rotation 11 qui reçoit en parties haute et basse, une série de branches radiales 12 et 13 horizontales qui sont conformées à leur extrémité libre en 12 b et 13 b pour recevoir en combinaison, des plaques verticales perforées 14 constituant un polygone fermé aux côtés illimités ou tout autre volume de forme connue.

7. Le moyen de montage et démontage des pieds, soit par coincement à l'aide d'une vis de pression sur forme en $\bigvee$ ou par emboîtement (mâle / femelle) des pieds de toute forme connue sur une forme mâle soudée ou assemblée soit sur la frette de l'extracteur, soit sur l'extracteur.

19 AOUT 1985
0200841

8. L'extracteur assemblé peut être relié par un coude d'évacuation à un bac embouti à désoperculer (figure 2 bis), de toute forme connue emboîté dans B, avant montage, afin de limiter l'encombrement de l'expédition.

9. Le tamis embouti 5 avec une perforation dans son fond et à plusieurs étages coopère à l'assemblage par sa collerette (venant de ce procédé de déformation des métaux) avec les collerettes de A et B et permet un filtrage plus précis grâce à l'option de grilles de pré-filtrage sur les étages de l'embouti.

10. La manivelle démontable (figure 8) est débrayable, assurant une sécurité supplémentaire dans la rotation de l'extracteur (dans les 2 sens).

0200841

1 / 4

FIG.1

FIG.2

bac amovible $B_1$
à désoperculer
$B$
placé
$1b$ à côté
pendant l'extraction
crude $B'_1$

FIG.4

FIG.3

Filtres

tamis 5
étagé embouti

Emboutie

tamis 5
étagé embouti

0200841

FIG.5

FIG.6

B

4

3a

3

A

6

7

8

4

B

3a

3

A

6

7

8

cadre

couteau

Fig 2 bis

B

B₁

A

B'₁

grille

FIG6bs₁

Frette

FIG6bis2

tube

FIG.7

FIG. 7 bis

cadre

0200841

Principe d'enclenchement

position B manivelle libérer la goupille 2.

position A manivelle enclanche

goupille 2 sur 3 aiguillou de crabot doit s'enclenche

Avant 5

vis 6

1
2
3
4
7
8
11

Ø25
Ø10,5
Ø10
Ø30
Ø15

30
20
25

goupille Ø4

le 21-01-85.

Variante

Manivelle démontable et débrayable

FIG. 8

0200841

Numero de la demande

**Office européen des brevets**

**RAPPORT DE RECHERCHE EUROPEENNE**

EP 85 42 0081

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | GB-A- 417 349 (DAW) <br> * Figures 1,2; page 2, lignes 53-87; page 3, lignes 14-32 * | 1 | A 01 K 59/04 |
| A | | 2 | |
| | --- | | |
| X | FR-A-2 524 767 (THOMAS) <br> * Figures 1,2,5; page 3, ligne 10 - page 4, ligne 30; page 5, lignes 1-11 * | 1 | |
| A | | 2,6 | |
| | --- | | |
| A | FR-A-1 422 786 (PHILY) <br> * Figure 1; page 1, colonne de droite * | 5 | |
| | --- | | DOMAINES TECHNIQUES RECHERCHES (Int. Cl.4) |
| A | FR-A-2 539 272 (THOMAS) <br> * Figures 1,5; page 8, ligne 30 - page 9, ligne 15 * | 7 | A 01 K |
| | --- | | |
| A | GB-A- 569 549 (REYNOLDS) <br> * Figures 7,8; page 5, lignes 100-114 * | 8 | |
| | ----- | | |

Le présent rapport de recherche a été établi pour toutes les revendications

| Lieu de la recherche <br> LA HAYE | Date d'achèvement de la recherche <br> 08-01-1985 | Examinateur <br> VILBIG K |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82